# EUROPÄISCHE PATENTANMELDUNG

(11) **EP 1 970 800 A1**
(43) Veröffentlichungstag der Anmeldung: **17.09.2008**
(21) Anmeldenummer: 07104277.4
(22) Anmeldetag: 15.03.2007
(51) Int. Cl.: G06F 3/12

(54) **Verfahren zur Erzeugung von Steuerungsdaten für die Herstellung eines Produkts**

(71) Anmelder: Brandgroup GmbH, 92718 Schirmitz (DE)
(72) Erfinder: Krachtus, Werner, 92718, Schirmitz (DE)
(74) Vertreter: Lang, Christian

(57) **Zusammenfassung**

Die vorliegende Erfindung betrifft ein Verfahren sowie ein entsprechendes Computerprogrammprodukt zur Erzeugung von Steuerungsdaten für die Herstellung eines Produkts, insbesondere eines drucktechnischen Erzeugnisses, bei welchem mindestens eine Verarbeitungseinheit und mindestens eine Dateneingabeeinheit vorgesehen sind, wobei die Verarbeitungseinheit die durch die Dateneingabeeinheit eingegebenen Daten in eine Datenstruktur verarbeitet, die zur Steuerung von Produktionsanlagen für die Herstellung eines Produkts geeignet sind oder in derartige Steuerungsdaten umgewandelt werden können, wobei die Verarbeitungseinheit mindestens zwei Verarbeitungsmodule (3, 4) umfasst, wobei ein erstes Verarbeitungsmodul (3) erste Steuerungsdaten (5) mit einer ersten Datenstruktur erzeugt und das zweite Verarbeitungsmodul (4) zweite Steuerungsdaten (6) mit einer zweiten Datenstruktur erzeugt, wobei das erste Verarbeitungsmodul erste Eingabedaten von einem ersten Nutzer verarbeitet und das zweite Verarbeitungsmodul zweite Eingabedaten von einem zweiten Nutzer erfordert und wobei die ersten Steuerungsdaten zur Verwendung durch den zweiten Nutzer erzeugt werden, während die zweiten Steuerungsdaten zur Verwendung für den ersten Nutzer erzeugt werden.

## Beschreibung

HINTERGRUND DER ERFINDUNG

GEBIET DER ERFINDUNG

Die vorliegende Erfindung betrifft ein Verfahren zur Erzeugung von Steuerungsdaten für die Herstellung eines Produkts, insbesondere eines drucktechnischen Erzeugnisses, bei welchem mindestens eine Verarbeitungseinheit und mindestens eine Dateneingabeeinheit vorgesehen sind, wobei die Verarbeitungseinheit die durch die Dateneingabeeinheit eingegebenen Daten in eine Datenstruktur verarbeitet, die zur Steuerung von Produktionsanlagen für die Herstellung eines Produkts geeignet sind oder in derartige Steuerungsdaten umgewandelt werden können.

STAND DER TECHNIK

Bei modernen Produktionsprozessen spielen informationstechnische Anlagen, die Prozessdaten für das spätere Produkt derart verarbeiten können, dass mit den verarbeiteten Daten Produktionsanlagen gesteuert werden können, eine herausragende Rolle, da in den meisten Produktionsprozessen viele Schritte automatisiert ablaufen. Die Gerätschaften, die für die Automation erforderlich sind, benötigen jedoch Steuerungsdaten, mit denen die Apparaturen und Geräte entsprechend gesteuert werden können. Dies ist in vielen technischen Bereichen der Fall.

Ein Beispiel für einen entsprechenden Produktionsprozess bieten drucktechnische Produkte, bei denen mittels einer Software die Gestaltung des drucktechnischen Produkts, beispielsweise eines Buches, einer Broschüre, eines Plakats oder dergleichen vorgenommen wird. Mittels der Software werden Steuerungsdaten für eine drucktechnische Anlage, wie im einfachsten Fall einen Drucker erzeugt, welcher das drucktechnische Produkt, also beispielsweise die Broschüre oder das Plakat ausdruckt. Die Automation, die durch die Software und den Drucker erreicht werden kann, ist jedoch lediglich dann rentabel, wenn eine Vielzahl von entsprechenden drucktechnischen Produkten erzeugt wird. Dies gilt in gleicher Weise bei allen anderen Anwendungsfällen der Automation. Insofern ist es für einen Nutzer möglicherweise unrentabel, für einzelne Anwendungsfälle Investitionen in die Automationstechnik vorzunehmen.

Dem wird in vielen Bereich dadurch abgeholfen, dass es professionelle Dienstleister gibt, die die Aufträge von vielen Auftraggebern bündeln und dadurch die kritische Quantität für einen rentablen Einsatz der Automationstechnik erreichen. Dies führt jedoch dazu, dass die Gestaltung des Produkts an einen Dienstleister abgegeben werden muss, was einerseits zu unbefriedigenden Ergebnissen führen kann oder zusätzlichen Aufwand bei der Übergabe der Information erzeugen kann.

Aus diesem Grund sind in verschiedenen Bereichen der Technik Systeme bekannt, bei denen Dienstleister die Software zur Gestaltung von Produkten kostenlos Nutzern zur Verfügung stellen, wobei die Nutzer mittels der Software eine eigene Gestaltung des Produkts erzielen können. Ein Beispiel hierfür ist die individuelle Herstellung von drucktechnischen Erzeugnissen, bei denen der Dienstleister bzw. Hersteller die entsprechende Software zur Gestaltung des Druckwerks dem Nutzer kostenlos zur Verfügung stellt, wobei der Nutzer mit dem fertig gestalteten Design lediglich das fertige Produkt von dem Dienstleister beziehen kann, der auch die Software bereitgestellt hat. Dies führt jedoch zu einer erheblichen Einschränkung in der Realisierung bzw. Umsetzung des Produkts.

OFFENBARUNG DER ERFINDUNG

AUFGABE DER ERFINDUNG

Es ist deshalb Aufgabe der Erfindung, eine technische Lösung bereitzustellen, die es ermöglicht, einen zumindest teilweise automatisierten Produktionsprozess derart abzuändern, dass für den Nutzer ein variabler Produktionsprozess, insbesondere bei der letztendlichen Umsetzung und Realisierung des Produkts unter Verwendung von professionellen Hilfsmitteln möglich ist und der Einsatz der professionellen Hilfsmittel, also insbesondere der Automationstechnik nicht nur für die Massenproduktion, sondern auch für Einzelproduktionen oder dergleichen einsetzbar ist. Insbesondere soll ein derartiges technisches Verfahren oder eine entsprechende Vorrichtung einfach aufgebaut und einfach durchzuführen sein.

TECHNISCHE LÖSUNG

Diese Aufgabe wird gelöst durch ein Verfahren mit den Merkmalen des Anspruchs 1 sowie ein Computerprogrammprodukt mit den Merkmalen des Anspruchs 11. Vorteilhafte Ausgestaltungen sind Gegenstand der abhängigen Ansprüche.

Die Erfindung geht aus von der Erkenntnis, dass aufwendige automationstechnische Anlagen, wie Verarbeitungseinheiten für Daten, die zu Steuerungsdaten für Produktionsanlagen führen, dann variabel für die spätere Produktion eingesetzt werden können, wenn eine entsprechende Zuordnung der Verarbeitungseinheiten auf die Nutzer erfolgt. Es ist erfindungsgemäß vorgesehen, dass eine entsprechende Verarbeitungseinheit mindestens zwei Verarbeitungsmodule umfasst, wobei durch die Verarbeitungsmodule unterschiedliche Steuerungsdaten, nämlich erste Steuerungsdaten mit einer ersten Datenstruktur und zweite Steuerungsdaten mit einer zweiten Datenstruktur erzeugt werden. Den Verarbeitungsmodulen sind entsprechende Dateneingabemodule zugeordnet, wobei das erste Dateneingabemodul Daten eines ersten Nutzers erfasst und an das erste Verarbeitungsmodul weitergibt, während das zweite Dateneingabemodul Daten des zweiten Nutzers erfasst und die Daten an die zweite Verarbeitungseinheit zur Verarbeitung weitergibt. Damit gibt es zwei getrennte Wege für zwei Nutzer, wobei der erste Nutzer derjenige ist, der das Produkt herstellen möchte, während der zweite Nutzer ein Anbieter entsprechender Produktionsmittel ist, der auch die entsprechenden Verarbeitungseinheiten und Dateneingabeeinheiten zumindest teilweise bereitstellt. Durch eine umgekehrte Zuordnung der in den beiden getrennten Wegen erzeugten Steuerungsdaten zu den Nutzern kommt es zu dem gewünschten Ausgleich der Nutzer, so dass der erste Nutzer, der das Produkt herstellen möchte, in die Lage versetzt wird professionelle Verarbeitungsmittel zu verwenden, jedoch in der Umsetzung des tatsächlichen Produkts entsprechend frei ist. Der zweite Nutzer, also der Anbieter der Produktionsanlagen und Bereitsteller der Verarbeitungsmittel hat die Möglichkeit, entweder selbst seine Produktionsmittel einzusetzen oder für die Bereitstellung der zweiten Steuerungsdaten eine entsprechende Vergütung zu erhalten. Folglich werden die ersten Steuerungsdaten zur Verwendung durch den zweiten Nutzer, also dem Anbieter der Produktionsmittel bzw. der Verarbeitungsmittel erzeugt, während die zweiten Steuerungsdaten zur freien Verwendung für den ersten Nutzer, also demjenigen, der das Produkt herstellen will (Käufer), erzeugt werden.

Durch diese erfindungsgemäße Aufteilung des Produktionsprozesses kann in einfacher und geschickter Weise eine mehrfache und vielfältige Nutzung professioneller Verarbeitungsmittel unter Beibehaltung der Variabilität und Freiheit für die spätere Umsetzung des Produkts erreicht werden. So kann beispielsweise der erste Nutzer, der das Produkt erwerben möchte, aufgrund geänderter technischer Anforderungen an das Produkt nach Nutzung der Verarbeitungseinheiten, also z. B. Gestaltung des drucktechnischen Erzeugnisses, einen anderen Anbieter von drucktechnischen Anlagen zur Umsetzung und Realisierung des Produktes nutzen, ohne auf seine Vorarbeiten bzgl. der Verarbeitung seiner Daten, also beispielsweise der Gestaltung eines drucktechnischen Erzeugnisses, wie des Fotobuchs, verzichten zu müssen.

Entsprechend kann das Verfahren so ausgestaltet sein, dass der erste Nutzer wählen kann, ob lediglich erste Steuerungsdaten oder nur zweite Steuerungsdaten oder beide erzeugt werden.

Das Verfahren kann zumindest teilweise durch eine oder mehrere programmierbare Datenverarbeitungsanlagen durchgeführt werden, wobei bevorzugt ist, das Verfahren weitgehend automatisiert durchzuführen. Entsprechend können zumindest Teile der Dateneingabeeinheiten bzw. -module sowie der Datenverarbeitungseinheiten bzw. Datenverarbeitungsmodule programmtechnisch, also durch Software realisiert werden. Lediglich die Ein- und Ausgabe der Daten kann durch entsprechende Hardware, wie Tastaturen, Bildschirme, Lautsprecher, Lesegeräte, aktive Bildschirme oder dergleichen ausgeführt sein. Die Datenverarbeitungsmodule können ein oder mehrere Softwaremodule umfassen, welche Teilaufgaben abarbeiten. Insbesondere können diese Softwaremodule bekannte, frei verfügbare und beliebige Softwaremodule sein, die in das entsprechende Datenverarbeitungsmodul bzw. -einheit, insbesondere einmalig zentral integriert sein können.

Entsprechend können die Dateneingabemodule und/oder Verarbeitungsmodule in einer oder mindestens zwei oder mehreren Datenverarbeitungsanlagen realisiert werden, die auch örtlich voneinander getrennt sein können. So ist es beispielsweise möglich, über das Internet vernetzte Computer einzusetzen, bei denen z. B. ein Programm zur Realisierung des Verfahrens und der Dateneingabemodule und Datenverarbeitungsmodule auf einem zentralen Rechner des Netzwerks abläuft, während über Datenfernleitungen, also das Internetnetzwerk, lediglich Dateneingabegeräte oder Anzeigegeräte unterstützt werden. Selbstverständlich ist es jedoch auch möglich, die entsprechende Software zur Durchführung des Verfahrens in mehrere Teile aufzuteilen, wobei dann den Nutzern unterschiedliche Teile zugeordnet sind. Beispielsweise kann der erste Nutzer, der das Produkt herstellen lassen möchte, die Software zur Realisierung des ersten Dateneingabemoduls und des ersten Datenverarbeitungsmoduls auf seinem lokalen Rechner durchführen, während das zweite Dateneingabemodul und das zweite Datenverarbeitungsmodul auf einem Rechner des zweiten Nutzers, also des Anbieters, durchgeführt wird. Damit kann die Dateneingabe, die Datenverarbeitung und die Bereitstellung der entsprechend hergestellten Steuerungsdaten an unterschiedlichen Orten erfolgen, wobei möglicherweise lediglich die Eingabedaten und/oder die Steuerungsdaten oder auch entsprechende Zwischendaten zwischen den einzelnen Datenverarbeitungsanlagen über Datenfernleitungen oder ein entsprechendes Netzwerk übermittelt werden.

Bei der Zusammenarbeit der Datenverarbeitungsmodule kann das zweite Datenverarbeitungsmodul neben den von dem zweiten Nutzer eingegebenen Daten die Daten des ersten Nutzers in Form der erzeugten ersten Steuerungsdaten, möglicherweise zwischenzeitlich erzeugter Daten (Zwischendaten) oder als unmittelbare Eingabedaten empfangen und verarbeiten.

Bei der Herstellung eines drucktechnischen Erzeugnisses, beispielsweise eines Fotobuchs kann das erfindungsgemäße Verfahren so ablaufen, dass der erste Nutzer sich beispielsweise über das Internet eine entsprechende Software auf seinen lokalen Rechner lädt, mit der er Bilddaten einlesen und zu einem drucktechnischen Erzeugnis, wie z. B. einem Fotobuch verarbeiten kann. Die aus dem Programm erzeugten Daten, d. h. die zweiten Steuerungsdaten, werden dann über das Internet an den Anbieter der drucktechnischen Produktionsmittel und der Software geschickt, wobei der erste Nutzer auswählen kann, ob der Anbieter das drucktechnische Produkt unmittelbar herstellen soll oder ob er alternativ oder zusätzlich zweite Steuerungsdaten beziehen möchte, mit denen eine allgemeine, frei verfügbare Ansteuerung von drucktechnischen Produktionsanlagen möglich ist.

Alternativ zum Herunterladen zumindest eines Teils der Software zur Erzeugung der ersten Steuerungsdaten ist es auch möglich, die Datenverarbeitungsanlage des ersten Nutzers lediglich als Eingabegerät zu nutzen, während die Software insgesamt bei der Datenverarbeitungsanlage des zweiten Nutzers, also des Anbieters, abläuft. Entsprechend ist auch die gesamte programmtechnische Durchführung des Verfahrens beim ersten Nutzer möglich, wobei dann der zweite Nutzer lediglich seine Daten über eine Datenfernleitung an die Datenverarbeitungsanlage des ersten Nutzers sendet. Somit kann das programmtechnische Produkt ein einziges Computerprogramm oder mehrere zusammenwirkende Teile eines Computerprogramms sein, die insbesondere auch auf unterschiedlichen, örtlich getrennten Datenverarbeitungsanlagen ablaufen. Bei dem Computerprogrammprodukt handelt es sich um eine Abfolge von Daten, die auf einem Speichermedium abgelegt sind, jedoch beispielsweise über eine Signalreihe empfangen werden können.

KURZBESCHREIBUNG DER FIGUREN

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich. Die Zeichnungen zeigen hierbei in rein schematischer Weise in
- Figur 1: ein Diagramm zum Verfahrensablauf gemäß einem ersten Ausführungsbeispiel;
- Figur 2: ein Diagramm zum Verfahrensablauf gemäß einem zweiten Ausführungsbeispiel; und
- Figur 3: ein Computernetzwerk zur Durchführung des erfindungsgemäßen Verfahrens.

AUSFÜHRUNGSBEISPIELE

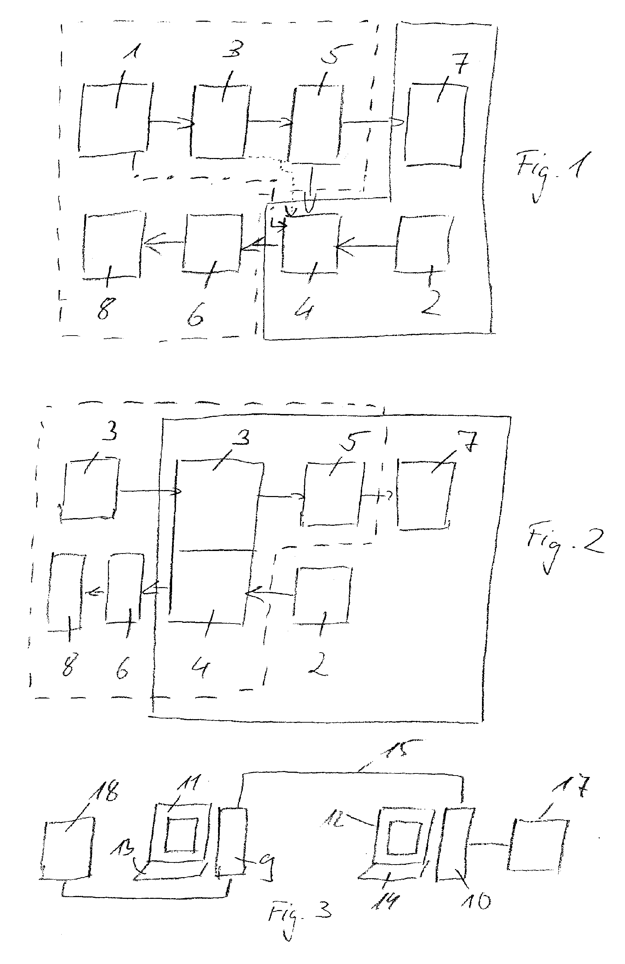

Die Figur 1 zeigt in einer rein schematischen Diagrammdarstellung den Ablauf des erfindungsgemäßen Verfahrens anhand eines ersten Ausführungsbeispiels.

Bei dem ersten Ausführungsbeispiel sind jeweils zwei Dateneingabemodule 1 und 2 sowie zwei Datenverarbeitungsmodule 3 und 4 vorhanden, die dafür sorgen, dass entsprechend erste Steuerungsdaten mit einer ersten Datenstruktur 5 durch das erste Verarbeitungsmodul 3 und zweite Steuerungsdaten mit einer zweiten Datenstruktur 6 durch das zweite Verarbeitungsmodul 4 erzeugt werden. Die Steuerungsdaten 5 und 6 können zur Steuerung von ersten Produktionsmitteln 7 bzw. zweiten Produktionsmitteln 8 eingesetzt werden.

ei dem Ausführungsbeispiel der Figur 1 sind das erste Dateneingabemodul 1, das erste Datenverarbeitungsmodul 3 und die Ausgabe der ersten Steuerungsdaten 5 in einer Datenverarbeitungsanlage programmtechnisch realisiert, die dem ersten Nutzer zugeordnet ist, wie der strichlierte Rahmen um die entsprechenden Blöcke zeigt.

Das zweite Dateneingabemodul und das zweite Datenverarbeitungsmodul 4 sowie die ersten Produktionsmittel 7 sind gemäß der durchgezogenen Linie dem zweiten Nutzer zugeordnet und auf einer örtlich von der Datenverarbeitungsanlage des ersten Nutzers getrennten Datenverarbeitungsanlage programmtechnisch realisiert. Auch die Ausgabe der zweiten Steuerungsdaten 6 kann dieser Datenverarbeitungsanlage zugerechnet werden.

Die zweiten Produktionsmittel 8 sind jedoch dem ersten Nutzer zugeordnet oder werden von diesem bereitgestellt bzw. kontrolliert.

Die Erzeugung von Steuerungsdaten für die Herstellung eines Produkts erfolgt nun in der Weise, dass der erste Nutzer mittels der ersten Datenverarbeitungsanlage für die Produktion des Produkts erforderliche Daten über das erste Dateneingabemodul 1 eingibt, wobei diese Daten dem ersten Datenverarbeitungsmodul 3 zugeführt werden, in welchem sie verarbeitet werden und erste Steuerungsdaten 5 erzeugt werden. Diese ersten Steuerungsdaten 5 können dann an den zweiten Nutzer weitergegebenen werden, wobei dieser mittels seiner ersten Produktionsmittel 7 das entsprechende Produkt herstellt.

Zusätzlich ist jedoch gemäß dem erfindungsgemäßen Verfahren ein zweites Datenverarbeitungsmodul 4 vorgesehen, welches die zweiten Steuerungsdaten derart verarbeiten kann, so dass zweite Steuerungsdaten 6 erzeugt werden, sofern durch ein zweites Dateneingabemodul 2 zusätzliche Daten des zweiten Nutzers eingegeben werden. Die zweiten Steuerungsdaten 6 dienen zur Steuerung der zweiten Produktionsmittel 8, die von dem ersten Nutzer ausgewählt werden können. Üblicherweise handelt es sich bei den zweiten Steuerungsdaten um eine Datenstruktur die allgemein bekannt ist und von einer Vielzahl von Produktionsmitteln verarbeitbar ist, so dass der erste Nutzer eine vielfältige Auswahlmöglichkeit von zweiten Produktionsmitteln 8 zur Verfügung hat.

Wie durch die gepunkteten bzw. punkstrichlierten Linien dargestellt ist, kann das zweite Verarbeitungsmodul 4 anstelle der ersten Steuerungsdaten auch Zwischendaten, die durch das erste Verarbeitungsmodul 3 erzeugt werden, oder unmittelbar in das erste Dateneingabemodul 1 eingegebene Daten verarbeiten.

Da bei dem Ausführungsbeispiel der Figur 1 zwei örtlich getrennte Datenverarbeitungsanlagen eingesetzt werden, welche durch handelsübliche Computer mit den üblichen Ein- und Ausgabegeräten gebildet sein können, kann die Verbindung zwischen den Datenverarbeitungsanlagen durch jede geeignete Verbindungstechnik, wie z. B. drahtlose Funktechnologien, drahtgebundene Netzwerktechnologien, z. B. nach dem Internetprotokoll etc. Verwendung finden.

Über diese Verbindungsleitungen der Datenverarbeitungsanlagen können dann entsprechend auch die ersten Steuerungsdaten 5 bzw. zweiten Steuerungsdaten 6 ausgetauscht werden.

Bei dem Ausführungsbeispiel gemäß der Figur 2 wird das erfindungsgemäße Verfahren durch eine einzige Datenverarbeitungsanlage realisiert, in welcher sowohl das erste Datenverarbeitungsmodul 3 als auch das zweite Datenverarbeitungsmodul 4 realisiert sind. Auch das erste Dateneingabemodul 1 und das zweite Dateneingabemodul 2 können programmtechnisch in dieser Datenverarbeitungsanlage realisiert werden, genauso wie die entsprechenden Ausgabeeinheiten für die ersten Steuerungsdaten 5 und die zweiten Steuerungsdaten 6. Allerdings können sowohl die Dateneingaben des ersten Nutzers in das Dateneingabemodul 1 als auch die Dateneingaben des zweiten Nutzers in das zweite Dateneingabemodul 2 entfernt von der Datenverarbeitungsanlage über entsprechende Kommunikationsverbindungen geleistet werden, wozu entsprechende drahtlose oder drahtgebundene Kommunikationstechniken wie Mobilfunk, Internet und dergleichen eingesetzt werden können. Entsprechend können auch die ersten Steuerungsdaten 5 zur Verwendung durch den zweiten Nutzer bzw. die zweiten Steuerungsdaten 6 zur Verwendung durch den ersten Nutzer entsprechend übermittelt werden. Auf diese Weise ist es möglich, die Datenverarbeitungsanlage entweder bei dem ersten Nutzer oder bei dem zweiten Nutzer zu betreiben. Dies ist in der Figur 2 durch die verschiedenen Zuordnungen der Schemablöcke zu den Nutzern durch unterschiedlich ausgeführte Rechteckbereiche dargestellt.

Die Figur 3 zeigt in einer rein schematischen Form zwei handelsübliche Computer 9, 10 mit Dateneingabemitteln, wie Tastaturen 13, 14, Lesegeräte für Speichermittel oder Ausgabegeräte wie Bildschirme 11, 12 und Lautsprecher dargestellt, die über eine Kabelverbindung 15 oder ein Netzwerk miteinander verbunden sind.

Die Anwendung kann nun gemäß den Ausführungsbeispielen der Figuren 1 und 2 derart erfolgen, dass entweder auf der Datenverarbeitungsanlage 9 lediglich das erste Verarbeitungsmodul 3 und auf der Datenverarbeitungsanlage 10 das zweite Verarbeitungsmodul 4 realisiert wird oder sowohl das erste Datenverarbeitungsmodul 3 als auch das zweite Datenverarbeitungsmodul 4 entweder auf der Datenverarbeitungsanlage 9 oder auf der Datenverarbeitungsanlage 10 realisiert werden. Entsprechend werden die erforderlichen Daten, die beispielsweise durch die Tastaturen 13 und 14 eingegebenen werden, über die Datenleitung 15 ausgetauscht.

Ein konkretes Anwendungsbeispiel ergibt sich für die Herstellung eines drucktechnischen Produktes, z. B. eines Fotobuches. Der zweite Nutzer, der beispielsweise die Datenverarbeitungsanlage 10 betreibt, stellt dem ersten Nutzer, der die Datenverarbeitungsanlage 9 betreibt, über Rechenkapazität auf seiner Datenverarbeitungsanlage 10 oder durch Übermittlung eines entsprechenden programmtechnischen Produkts über die Datenleitung 15 auf der Datenverarbeitungsanlage 9 ein erstes Datenverarbeitungsmodul 3 sowie ein erstes Dateneingabemodul 1 zur Verfügung, so dass der erste Nutzer mittels der Datenverarbeitungsanlage 9 über dort vorhandene Speichermittel oder Lesegeräte für Speichermittel sowie die Tastatur 13 Fotografien zu einem Fotobuch anordnen kann, wobei er auf dem Monitor 11 das Ergebnis seines Tuns verfolgen und überprüfen kann.

Nach Fertigstellung des Fotobuchs verarbeitet das erste Datenverarbeitungsmodul 3 die eingegebenen Daten zu ersten Steuerungsdaten 5, die beispielsweise über die Datenleitung 15 zur Datenverarbeitungsanlage 10 des zweiten Nutzers gesendet werden können. Diese ersten Steuerungsdaten können dann ohne weitere Verarbeitung oder durch eine zusätzliche Überarbeitung zur Steuerung der drucktechnischen Anlage 17 verwendet werden, die mit der Datenverarbeitungsanlage 10 des zweiten Nutzers verbunden ist.

Gemäß dem Verfahren kann der erste Nutzer jedoch die ersten Steuerungsdaten 5 auch zur Datenverarbeitungsanlage 10 senden, damit diese dort in der zweiten Datenverarbeitungseinheit 4 zu zweiten Steuerungsdaten 6 verarbeitet werden, die über die Datenleitung 15 wieder an die Datenverarbeitungsanlage 9 zurückgesendet werden können, um von dort auf eine drucktechnische Einrichtung 18 des ersten Nutzers weitergegeben zu werden, so dass dort das entsprechende drucktechnische Produkt, also das Fotobuch hergestellt werden kann. Für die Verarbeitung der ersten Steuerungsdaten 5 in dem zweiten Datenverarbeitungsmodul 4 in der Datenverarbeitungsanlage 10 ist jedoch die Eingabe von Daten über das zweite Dateneingabemodul 2 des zweiten Nutzers erforderlich. Diese Dateneingabe kann beispielsweise darin bestehen, dass eine Bestätigung über den Erwerb der Nutzungsrechte für die zweiten Steuerungsdaten 6 vorhanden ist. Auf diese Weise ist es möglich, dass der zweite Nutzer dem ersten Nutzer das erste Datenverarbeitungsmodul 3 sowie das erste Dateneingabemodul 1 kostenlos zur Verfügung stellen kann, da er durch die programmtechnische Einrichtung sicherstellt, dass der erste Nutzer für die Verwendung des ersten Datenverarbeitungsmoduls 3 bzw. ersten Dateneingabemoduls 1 dadurch bezahlt, dass er entweder das Produkt bei dem zweiten Nutzer herstellen lässt oder für die zweiten Steuerungsdaten 6 bezahlt.

Anstelle der Verwertung der ersten Steuerungsdaten 5 in dem zweiten Datenverarbeitungsmodul 4 können auch entsprechende Zwischendaten oder unmittelbar die von dem ersten Nutzer eingegebenen Daten Verwendung finden, die dann ebenfalls über die Datenleitung 15 übermittelt werden.

Bei der Realisierung der Ausführungsform der Figur 2 durch das Computernetzwerk der Figur 3 werden entweder in der Datenverarbeitungsanlage 9 oder in der Datenverarbeitungsanlage 10 sowohl das erste Datenverarbeitungsmodul 3 als auch das zweite Datenverarbeitungsmodul 4 realisiert, so dass über die Datenleitung 15 lediglich die eingegebenen Daten und/oder erste oder zweite Steuerungsdaten 5, 6 übermittelt werden.

In der Praxis kann somit beispielsweise ein erster Nutzer sich über das Internet ein entsprechendes Programm von dem zweiten Nutzer, also dem Anbieter von Fotobüchern ein entsprechendes Programm kostenlos herunterladen, mit dem er Fotobücher erstellen kann. Sofern er das Fotobuch bei dem Hersteller, welcher das Programm zur Verfügung gestellt hat, bestellt, fallen keine weiteren Nutzungskosten an. Entschließt sich der erste Nutzer, also derjenige, der das Fotobuch mit seinen eigenen Bildern zusammenstellt, jedoch dazu, das Fotobuch nicht von dem Anbieter der kostenlos zur Verfügung gestellten Software zu beziehen, so muss er für die Bereitstellung von allgemein und frei verwendbaren Steuerungsdaten eine entsprechende Nutzungsgebühr für die verwendete Software bezahlen.

Mit der vorgestellten Technologie ist es somit möglich, einsatzabhängige Lizenzgebühren für eine Software zur Herstellung eins Produktes zu realisieren, wobei keine hohen Anschaffungskosten für die Software anfallen.

Obwohl die vorliegende Erfindung an den gezeigten Ausführungsbeispielen ausführlich erläutert worden ist, ist für den Fachmann selbstverständlich, dass Abwandlungen oder Änderungen, insbesondere im Hinblick auf die andersartige Kombination einzelner Merkmale oder das Weglassen einzelner Merkmale möglich sind, ohne den Schutzbereich der beigefügten Patentansprüche zu verlassen.

## Patentansprüche

1. Verfahren zur Erzeugung von Steuerungsdaten für die Herstellung eines Produkts, insbesondere eines drucktechnischen Erzeugnisses, bei welchem mindestens eine Verarbeitungseinheit und mindestens eine Dateneingabeeinheit vorgesehen sind, wobei die Verarbeitungseinheit die durch die Dateneingabeeinheit eingegebenen Daten in eine Datenstruktur verarbeitet, die zur Steuerung von Produktionsanlagen für die Herstellung eines Produkts geeignet sind oder in derartige Steuerungsdaten umgewandelt werden können,
**dadurch gekennzeichnet, dass**
die Verarbeitungseinheit mindestens zwei Verarbeitungsmodule (3, 4) umfasst, wobei ein erstes Verarbeitungsmodul (3) erste Steuerungsdaten (5) mit einer ersten Datenstruktur erzeugt und das zweite Verarbeitungsmodul (4) zweite Steuerungsdaten (6) mit einer zweiten Datenstruktur erzeugt, wobei das erste Verarbeitungsmodul erste Eingabedaten von einem ersten Nutzer verarbeitet und das zweite Verarbeitungsmodul zweite Eingabedaten von einem zweiten Nutzer erfordert und wobei die ersten Steuerungsdaten zur Verwendung durch den zweiten Nutzer erzeugt werden, während die zweiten Steuerungsdaten zur Verwendung für den ersten Nutzer erzeugt werden.

2. Verfahren nach Anspruch 1,
**dadurch gekennzeichnet, dass**
der erste Nutzer wählen kann, ob lediglich erste Steuerungsdaten (5) oder zweite Steuerungsdaten (6) oder beide erzeugt werden.

3. Verfahren nach Anspruch 1 oder 2,
**dadurch gekennzeichnet, dass**
das Verfahren zumindest teilweise durch eine oder mehrere programmierbare Datenverarbeitungsanlagen (9, 10) durchgeführt wird, wobei eine Datenverarbeitungsanlage zumindest ein speicherbares Datenverarbeitungsprogramm ausführt, welches bei Ausführung zumindest ein Verarbeitungsmodul realisiert.

4. Verfahren nach einem der vorhergehenden Ansprüche,
**dadurch gekennzeichnet, dass**
die Dateneingabeeinheit zumindest zwei Dateneingabemodule (1, 2) umfasst, die vorzugsweise zumindest teilweise programmtechnisch realisiert sind.

5. Verfahren nach Anspruch 4,
**dadurch gekennzeichnet, dass**
die Dateneingabemodule (1, 2) in einer oder mindestens zwei, vorzugsweise örtlich getrennten Datenverarbeitungsanlagen (9, 10) realisiert sind, wobei insbesondere eine räumlich getrennte Dateneingabe erfolgen kann.

6. Verfahren nach einem der vorhergehenden Ansprüche,
**dadurch gekennzeichnet, dass**
die Verarbeitungsmodule (3, 4) in einer Datenverarbeitungsanlage (9, 10) oder in mindestens zwei, vorzugsweise örtlich getrennten Datenverarbeitungsanlagen realisiert sind.

7. Verfahren nach einem der vorhergehenden Ansprüche,
**dadurch gekennzeichnet, dass**
das zweite Verarbeitungsmodul (4) die ersten Steuerungsdaten (5) des ersten Verarbeitungsmoduls oder Zwischendaten des ersten Verarbeitungsmoduls (3) oder die Eingabedaten des ersten Dateneingabemoduls (1) verarbeitet.

8. Verfahren nach einem der vorhergehenden Ansprüche,
**dadurch gekennzeichnet, dass**
Datenverarbeitungsanlagen eingesetzt werden, die durch ein Netzwerk (15) verbunden sind, so dass die Dateneingaben, die Datenverarbeitung und die Bereitstellung der Steuerungsdaten an unterschiedlichen Orten erfolgen können.

9. Verfahren nach einem der vorhergehenden Ansprüche,
**dadurch gekennzeichnet, dass**
der erste Nutzer Bilddaten zur Erzeugung eines drucktechnischen Produkts eingibt, wobei der erste Nutzer wählen kann, ob das drucktechnische Produkt durch den zweiten Nutzer auf Grund der ersten Steuerungsdaten hergestellt wird, oder ob durch den zweiten Nutzer zweite Steuerungsdaten in Form eines bekannten Druckformats, insbesondere als pdf (portable data format)-Datei zur freien Verwendung durch den ersten Nutzer bereit gestellt werden.

10. Verfahren nach einem der vorhergehenden Ansprüche,
**dadurch gekennzeichnet, dass**
die Verarbeitungsmodule mindestens ein oder mehrere Softwaremodule aufweisen, welche zur Durchführung von Teilaufgaben integriert sind.

11. Computerprogrammprodukt, welches eine Datenabfolge auf einem Speichermedium umfasst, die in einer Datenverarbeitungsanlage zur Ausführung des Verfahrens nach einem der vorhergehenden Ansprüche führt.

12. Computerprogrammprodukt nach Anspruch 11,
**dadurch gekennzeichnet, dass**
mehrere Teile mit jeweiligen Datenabfolgen auf unterschiedlichen Speichermedien vorgesehen sein können, die zusammen zur Ausführung des Verfahrens nach den Ansprüchen 1 bis 10 führen, wobei die Teile der Datenabfolgen den jeweiligen Nutzern zugeordnet sind.
